(19) Europäisches Patentamt
European Patent Office
Office européen des brevets

(11) Publication number: **0 077 164 B1**

(12) # EUROPEAN PATENT SPECIFICATION

(45) Date of publication of patent specification: **26.07.89**

(51) Int. Cl.[4]: **C 08 F 220/12** // (C08F220/12, 228:02, 212:14)

(21) Application number: **82305269.1**

(22) Date of filing: **04.10.82**

(54) **Adhesives containing sulfonated copolymers or terpolymers.**

(30) Priority: **05.10.81 US 308425**

(43) Date of publication of application:
**20.04.83 Bulletin 83/16**

(45) Publication of the grant of the patent:
**26.07.89 Bulletin 89/30**

(84) Designated Contracting States:
**BE DE FR GB IT NL**

(56) References cited:
**FR-A-2 145 290**
**US-A-4 197 127**

(73) Proprietor: **Exxon Research and Engineering Company**
**P.O.Box 390 180 Park Avenue**
**Florham Park New Jersey 07932 (US)**

(72) Inventor: **Lundberg, Robert Dean**
**4 Brian Drive**
**Bridgewater New Jersey 08807 (US)**
Inventor: **McGrath, James Edward**
**902 Elliott Drive**
**Blacksburg Virginia 24060 (US)**

(74) Representative: **Bawden, Peter Charles et al**
**EXXON CHEMICAL LIMITED EXXON CHEMICAL TECHNOLOGY CENTRE PO Box 1**
**Abingdon Oxfordshire OX13 6BB (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 077 164 B1

**Description**

The formation of sulfonate containing polymers has been clearly defined in a number of US—A—3,642,728; US—A—3,836,511; US—A—3,847,854; US—A—3,870,841; and US—A—3,877,530. These patents teach the formation of sulfonate polymers by contacting a polymer having olefinic unsaturation with a sulfonating agent.

Copolymers and terpolymers containing sulfonate monomers at low levels have been described previously in the art. For example, U.S. Patent US—A—3,306,871 describes the preparation of latices based on several different vinyl monomers. This prior art is particularly relevant to the present invention because it distinguishes those features which are characteristic of much of the prior art in the area of metal sulfonate ionomers.

Sulfonate ionomers can manifest many perculiarities which make their characterization extremely difficult. The foremost of these is a strong ionic cross-linking which makes such materials difficult to dissolve in solution or to achieve melt flow. These techniques are necessary to characterise a polymeric product for subsequent use, as a thermoplastic elastomer or as an oil additive or in similar polymeric applications. The quantification of melt flow properties or selected solution properties, therefore, becomes an extremely important step in order to known whether these ionomeric products are even being prepared in a reproducible fashion, or whether they are suited for selected applications.

This particular problem is exacerbated even more when describing copolymers of acrylate monomers and metal or amine sulfonate containing monomers, for in this latter case, the probability of a high degree of covalent cross-linking is extremely likely. When concurrent problems of ionic cross-linking and covalent cross-linking are now combined with problems of uniform copolymers obtained from a relatively non-polar hydrocarbon monomer and a highly polar salt molecular which are normally completely immiscible, and the normal problems of molecular weight control desired of all polymer systems, it becomes evident why there is paucity of information concerning the characteristics of the isolated sulfonate ionomers obtained by copolymerization of dienes and metal or amine sulfonate containing monomers. A review of the patent art and the literature suggests that a complete characterization of such systems has not often, if ever, been previously attempted.

Most of the patent art in this area describes the latices achieved by the presumed reaction of such sulfonate monomers with selected vinyl and diene monomers. That the products are copolymers is presumed by suggestions that the resulting latices are more stable, more water resistant, and more adherent than those obtained in the absence of the sulfonate monomer.

The present invention is directed to the use of a different class of copolymers of acrylates or methacrylates and metal or amine sulfonate containing monomers. This invention is concerned with the preparation and resultant compositions of acrylates or methacrylates and sulfonate monomers which are of desirable molecular weight, are substantially free of covalent cross-linking (less than 10 percent of the product appears as gel in prescribed tests), contain sulfonate levels equivalent to from 0.5 weight percent chemically combined sulfur up to 5 weight percent chemically combined sulfur, are water insoluble, and are prepared by a process designed to give products substantially free of homopolymers of any of the polymerizable components, and are solid products, characterizable in terms of reduced viscosity, molecular weight and/or melt flow (at elevated temperatures).

GB—A—895,033 concerns specifically, latices based on the copolymerization of a suitable aromatic vinyl sulfonic acid derivative with a variety of different polymerizable monomers. It is important to note that all aspects of that invention are solely concerned with the resultant latices and that the products are not described as isolated entities.

For the purposes of the present invention, many of the features of the products in GB—A—895,033 are undesirable. For example, it is emphasized in that application that improved latex stability is an asset whereas for the purpose of the present invention improved latex stability can be a debit in that difficulties may be encountered in isolating the solid polymer.

The present invention is directed towards products which are demonstrated to be substantially free of covalent cross-linking, and techniques whereby the ionic cross-linking desired in such systems can be separated from the covalent cross-linking. This demonstration has not been illustrated in the prior art for copolymers of sulfonate containing monomers with polymerizable conjugated diolefins. Without this illustration, it would be difficult, if not impossible, to employ resultant products in some of their intended applications.

Finally, and most importantly, US—A—3,306,871 and GB—A—895,033 specifically state in column 1, second paragraph of both applications that those inventions were concerned with polymer latices wherein the sulfonic acid salt is incorporated as an anionic stabilizer. It is important to emphasize that, in the present invention, the sulfonate is incorporated at specific levels to function as an ionic cross-linking agent. In these systems the neutralized sulfonate provides a salt species which interacts with other salt species to provide a strong ionic cross-link. This characteristic is observed and desired, not in the latex form, but is extremely important in determining the bulk physical properties. It is apparant that the products of this invention differ markedly from these of the prior art in properties, in composition and in their specific structural features.

US—A—Patent 3,322,734 teaches that ionically cross-linked copolymers may be prepared via direct

copolymerization and teaches how such ionic cross-linking can change the properties of polymers. However, that patent specifically is directed at neutralization levels of between 10 and 90 percent of the acid species present. The present invention is directed at neutralization levels of 95 percent and above and preferably at ionomers which are 100 percent neutralized. The properties of the resulting material which are 100 percent neutralized are substantially different from those which are only 50 percent or 90 percent neutralized. Therefore, the present invention is substantially different from that of US—A—3,322,734.

US—A—Patent 2,913,429 is concerned with synthetic latices designed to form films which are based on aqueous dispersions of copolymers of one or more aliphatic conjugated diolefins with at least two monovinyl aromatic compounds including a monovinyl aromatic sulfonate.

This invention differs from that prior art in the following:

(1) This application is not concerned with films from latices.

(2) That invention contains from 4 to 35, preferably from 5 to 15 weight percent sulfur monomer and thereby provides coatings or films which can readily be removed from substrates by washing or scrubbing with water. Obviously, those cited systems are designed to be water sensitive and thereby removable.

(3) That cited patent requires 93 to 25, preferably from 77 to 45 percent vinyl aromatic compound such as styrene. The present application does not permit more than 20 percent styrene.

(4) That invention requires a water soluble peroxy compound as initiator whereas this application requires a hydrocarbon soluble peroxy initiator.

(5) The present invention is directed to copolymers of acrylates and/or methacrylates.

There are many other distinctions, but it is obvious that the above invention is directed at essentially rigid removable paint films, wherein the sulfonate groups provide adequate water sensitivity to permit the formation of a stable latex which further can be deposited as a removable film. Nowhere in that invention is the concept of a metal sulfonate copolymer possessing strong ionic cross-links in the bulk product taught, inferred, or even desired.

The solid elastomeric co- or terpolymer used in the invention comprises at least 80 percent by weight of units derived from at least one alkyl acrylate or alkyl methacrylate monomer, the alkyl group having from 1 to 15 carbon atoms and of units derived from a metal or amine neutralised sulfonate monomer characterized by the formula:

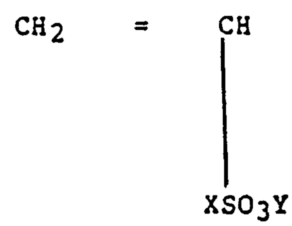

where X is $(CH_2)_n$, or paraphenylene wherein n = 0, 1, 3 or 4, and Y is a cation selected from Groups IA, IIA, IB and IIB of the Periodic Table or an amine of the formula:

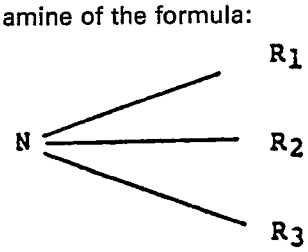

where $R_1$, $R_2$ and $R_3$ are aliphatic groups of $C_1$ to $C_{12}$ or hydrogen, the copolymer being water insoluble and substantially free of covalent cross-linking and the amount of sulphonate monomer providing at least 0.5 weight percent but less than 5 weight percent of chemically combined, sulphur.

The present invention relates to the formation of sulfonate containing co- or terpolymers which are preferably formed by a free radical copolymerization process. The monomers used in the free radical emulsion copolymerization processes are alkyl acrylates or alkyl methacrylates which are copolymerized with sulfonate containing monomers.

The acrylate or methacrylate and sulfonate containing monomer are dispersed in a water phase in the presence of an initiator, a water soluble reducing agent, and a suitable surfactant, wherein the temperature is sufficient to initiate polymerization. The resultant latex is coagulated usually by the addition of an aqueous salt solution and the recovered co- or terpolymer is washed with water and subsequently dried under vacuum at room temperature.

The co- or terpolymers formed from the free radical emulsion copolymerization process of the present invention can be generally described as having a $\overline{M}n$ of 5,000 to 200,000. The co- or terpolymers of the present invention contain 0.5 to 5 weight percent of chemical combined sulfur. The co- or terpolymers of the present invention are water insoluble, substantially gel-free, thermally stable, and oxidatively stable. Typical, but non-limiting examples of the copolymers which can be formed by the present free radical emulsion copolymerization process are: ethyl-acrylate/potassium styrene sulfonate copolymer, n-butyl-

acrylate/potassium styrene sulfonate copolymer, 2-ethyl hexyl-methacrylate/potassium styrene sulfonate copolymer. A large number of copolymers and even terpolymers can be formed by the present free radical copolymerization process. Typically, the copolymerization of any $C_1$ to $C_{15}$ alkyl acrylate or $C_1$ to $C_{15}$ alkyl methacrylate can be readily copolymerized with any sulfonate containing monomer as is defined herein. Terpolymers with styrene, acrylonitrile, vinyl chloride as the termonomers with the aforementioned acrylates are also contemplated, provided that less than 20 weight percent of the termonomer is combined therein.

Acrylates or Methacrylates

The acrylates of the present invention are generally, defined as alkyl acrylates or alkyl methacrylate monomers having 1 to 15 carbon atoms in the alkyl moiety. Typical, but non-limiting examples of acrylates and methacrylates useful in the present invention are: methyl acrylate, ethylacrylate, propylacrylate, n-butylacrylate, n-butyl methacrylate, 2-ethylhexylacrylate, 2-ethyl-hexylmethacrylate, isodecylacrylate, isodecyl methacrylase, and methylmethacrylates. The preferred monomers are n-butylacrylate, 2-ethylhexylmethacrylate, ethylacrylate, 2-ethylhexylacrylate. In the formation of the sulfonate containing copolymer, one copolymerizes one of the aforementioned acrylates or methacrylates with the sulfonate containing monomer.

Sulfonate Containing Monomers

The sulfonate containing monomers of the present invention which are water soluble can be generally described as a monomer having unsaturation and a metal or amine sulfonate group. The metal or amine neutralized sulfonate monomer is characterized for the formula:

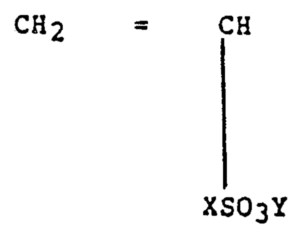

where X is aromatic or $(CH_2)_n$, where n = 0, 1, 3 or 4, and Y is a cation selected from Groups IA, IIA, IB and IIB of the Periodic Table or an amine of the formula:

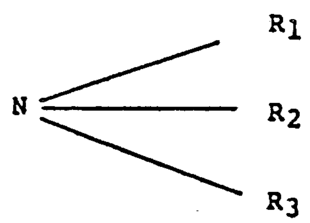

where $R_1$, $R_2$ and $R_3$ are aliphatic groups of $C_1$ to $C_{12}$ or hydrogen. Particularly suitable metal cations are sodium, potassium, and zinc, and an especially preferred metal cation is sodium. Typical but non-limiting examples of suitable sulfonate containing monomers are:

1) $CH_2 = CHSO_3{}^-Na^+$ sodium vinyl sulfonate
2) $CH_2 = CHCH_2SO_3{}^-Na^+$ sodium allyl sulfonate

3) 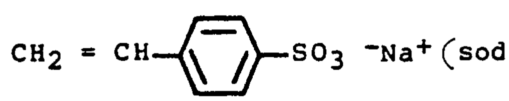 (sodium styrene sulfonate)

An especially preferred sulfonate containing monomer is metal sulfonated styrene. The molar ratio of sulfonate containing monomer to acrylate or methacrylate monomer is 1/200 to 1/5.

A redox emulsion polymerization recipe used in this invention is effective in initiating the copolymerization of water insoluble and water soluble comonomers in an emulsion system. The surface of the micelle/growing polymer particle is believed to be the locus of formation of initiator molecules as well as the polymerization locus. Water phase homopolymerization of the polar, water soluble monomer is effectively depressed because of low primary radical concentration in the aqueous phase.

Similarly, the activity of the free radical catalyst in the hydrocarbon monomer phase is substantially less than in the vicinity of the reducing agent. As a result the polymerization of homopolymers is believed to be effectively depressed.

Reducing agents suitable for this invention are those known in the art with the additional requirement

that they be soluble in water. A preferred reducing agent is triethylenetetramine.

A variety of free radical catalysts can be employed in this invention. This includes a preferential class of free radical initiators such as benzoyl peroxide, cumene peroxide, diisopropylbenzene hydroperoxide, t-butyl hydroperoxide and similar systems which will be preferentially soluble in the monomer phase as opposed to the aqueous phase. There are a large number of such peroxides used in the art and those having the appropriate solubility behavior and suitable decomposition temperatures in the presence of the reducing agents are satisfactory for the purposes of this invention. Also a large number of water soluble initiators can be employed in this invention. A variety of such systems are known and are employed as redox initiators. A preferred catalyst system is potassium persulfate and sodium bisulfite. Others can also be employed.

The non-ionic surfactants employed for this invention are varied and well known in the art. The typical emulsifiers or surfactants can be employed; however, some are more effective than others in generating latices of better stability. A preferred emulsifier is Atlox 8916TF. (The word "Atlox" is a registered Trade Mark). The choice of the emulsifier is not critical.

The buffering agents employed in the polymerization process are selected from sodium carbonate, ammonia, sodium acetate, trisodium phosphate, etc. These buffering agents are typically employed at a concentration of about 0.1 to about 5 grams per 100 grams water employed in the emulsion system.

Chain transfer agents can be readily employed in the present polymerization process for controlling the molecular weight of the resultant copolymer. The concentration of chain transfer agent is from 0 to 1.0 grams per 100 grams of the combined weight of the sulfonate containing monomer and the acrylate or methacrylate monomer.

The free radical emulsion copolymerization of the water soluble sulfonate containing polymer and the acrylate or methacrylate monomer yields a stable latex, wherein the resultant water insoluble copolymer is not covalently cross-linked and possesses substantial ionic cross-linking, and has 0.5 to <5 weight percent of chemically combined sulfur, more preferably 0.5 to 3. The resultant latex can be coagulated by the addition of an aqueous salt solution to the emulsion at a volume ratio of the aqueous salt solution to total volume of the emulsion of 10 to 0.5. The water insoluble copolymer is recovered by filtration and subsequently washed with water and dried under vacuum conditions. Alternatively, the polymer can be coagulated by precipitation with alcohol such as methanol. Alternatively, the latex can be used to form ionically cross-linked films by evaporation to dryness.

While there is a wide spectrum of polymers which can be prepared via this invention, it is important to emphasize that the properties of these polymers will be much different from those polymers not possessing ionic associations. In addition, the properties of these sulfonate copolymers are very dependent on the type of acrylate or methacrylate contained in this polymer. While the properties of this family of polymers is well-known to be dependent on the length of the alkyl group in the acrylate or methacrylate ester group, the difference in the current family of polymers goes beyond this widely known characteristic. The presence of a metal or amine neutralized sulfonate group in the polymer backbone promotes strong ionic association. The nature, extent and consequences of this association is very dependent on the polarity of the polymer backbone. For example, an ethylacrylate backbone and a 2-ethyl-hexylacrylate copolymer with sodium styrene sulfonate as the ionic moiety, can give quite different results in terms of the ionic association. In the case of the ethylacrylate, the more polar backbone can result in greater interaction with the ionic group and thereby weaken the ionic associations. In the case of the lesser polar monomer, stronger ionic associations can prevail with some important technological differences. The difference of this degree of ionic interaction with the polymer backbone can be labeled a form of internal plasticization. As such, differences in polymer solubility tensile properties, etc., can result.

These unexpected results are one consequence of this family of acrylate or methacrylate copolymers with sulfonate monomers.

The uses for these copolymers are varied and extensive. Selected compositions of n-butyl-acrylate sulfonate copolymers and similar systems are as thermoplastic elastomers — being elastomeric and thermoplastic in nature. These materials are useful in adhesive, (both hot melt and pressure sensitive) water based coatings, films, hydrocarbon viscosifiers and coatings.

Detailed Description of the preferred Embodiments

As exemplified in the following illustrative Examples, a series of copolymers were prepared.

Examples 1 to 5

Ethyl, n-butyl and 2-ethyl hexyl (2, 3, 4) acrylate and potassium styrene sulfonate (KSS) copolymerize readily. All of the experiments have been done under emulsion conditions using a non-ionic surfactant, as shown in Table I (only butyl acrylate data shown). The data in Table I indicate high conversions of reasonably stable latex can be achieved under practical conditions. Thermal analysis studies (DSC) have now been conducted on several of the copolymers and are summarized in Table II. It is interesting to note that the acrylate $T_g$ is unchanged over the range potassium styrene sulfonate uninvestigated. This, of course, is evidence for the presence of a second ionomeric phase.

The copolymers can be quite strong and extensible, as shown in Table III. These preliminary data were obtained by compression molding at ~170°C.

Example 1 represents a copolymer of n-butylacrylate and sodium styrene sulphonate, while Example 5 represents the homopolymer of sodium styrene sulfonate. The tensile stress at break for the poly-n-butyl acrylate is less than 8 kg. per $cm^2$ while the sulfonate copolymers have tensile strengths as much as 5000% greater. Similarly, the reduction in elongation with increasing sulfonate content is a measure of the ionic cross-linking of these polymers. The fact that these materials can be compression molded, and yet retain good elastomeric properties, as well as high tensile strengths, shows that they are excellent candidates as thermoplastic elastomers.

TABLE 1

PREPARATION OF n-BUTYLACRYLATE AND SULFONATED STYRENE COPOLYMERS

| Example No. | N-BUAC(a) parts | SST(b) parts | ATLOX 8916TF parts | $K_2S_2O_8$ parts | $NaHSO_3$ parts | $H_2O$* parts |
|---|---|---|---|---|---|---|
| 1 | 10.0 | 1.901 | 0.402 | 0.0335 | 0.0147 | 30+10 |
| 2 | 10.0 | -- | 0.400 | 0.0340 | -- | 14+8 |
| 3 | 10.0 | 1.006 | 0.419 | 0.0306 | 0.0141 | 30+10 |
| 4 | 10.0 | 0.508 | 0.430 | 0.0305 | 0.0146 | 30+10 |
| 5 | -- | 2.070 | -- | 0.0135 | -- | 20 |

| Example No. | mole% | Amount of SST wt. % | meq/100 gr(c) | Rx Temp.(d) °C | Time (hr.) | Yield % wt. |
|---|---|---|---|---|---|---|
| 1 | 9.8 | 16.0 | 71.6 | 60 | 5.5 | 93.4 |
| 2 | -- | -- | -- | 60 | 19 | 84.7 |
| 3 | 5.5 | 9.1 | 41.0 | 65 | 9 | 93.2 |
| 4 | 2.8 | 4.8 | 21.8 | 65 | 9 | 95.1 |
| 5 | 100 | 100 | 449.8 | 60 | 23 | 97.3 |

* Second quantity added after 1 hour.
(a) n-butyl acrylate
(b) sodium styrene sulfonate
(c) millequivalents per 100 grams polymer, as sulfonic acid groups.
(d) $R_x$ temperature = reaction temperature

TABLE II

THERMAL ANALYSIS OF n-BUTYLACRYLATE AND SULFONATED STYRENE COPOLYMERS BY DSC*

| Example No. | % SST (mole) | $T_{g\,^oC}$ (1) | $T_{g\,^oC}$ (2) | Remarks |
|---|---|---|---|---|
| 1 | - | -50 | - | |
| 2 | 9.8 | -50 | - | Started to decompose about 320°C |
| 3 | 5.5 | -50 | - | |
| 4 | 2.8 | -50 | - | |
| 5 | 100 | - | 329 | Started to decompose above 420°C |

*Heating Rate: 10 deg/min.

## TABLE III

STRESS-STRAIN DATA OF SULFONATED STYRENE + BUTYL ACRYLATE COPOLYMERS

Initial length of samples : 10.0 mm
Crosshead speed : 10.0 mm/min
Test temperature : 25°C

| Sample | % SST (mole) | (mm) | Yield Str. (kg/cm$^2$) | Str. at Break (kg/cm$^2$) | % Elong at break |
|---|---|---|---|---|---|
| 1 | - | 65 | 14.9 | 7.87 | 650 |
| 2 | 2.8 | 54 | 69.6 | 57.0 | 540 |
| 3 | 5.5 | 47 | 381 | 345 | 470 |
| 4 | 9.8 | 32 | 438 | 411 | 320 |

## Claims

1. The use in adhesives of a solid, elastomeric, co- or terpolymer comprising at least 80 per cent by weight of units derived from at least one alkyl acrylate or alkyl methacrylate monomer the alkyl group having from 1 to 15 carbon atoms and of units derived from a metal or amine neutralised sulfonate monomer characterised by the formula:

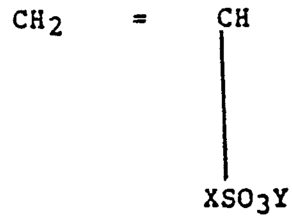

wherein X is $(CH_2)_n$ or paraphenylene wherein n = 0, 1, 2, 3 or 4 and Y is a cation selected from Groups IA, IIA, IB and IIB of the Periodic Table or an amine of the formula:

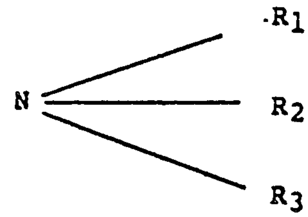

where $R_1$, $R_2$ and $R_3$ are $C_1$ to $C_{12}$ aliphatic groups or hydrogen, the copolymer or terpolymer being water insoluble and substantially free of covalent cross-linking and the amount of sulphate monomer providing at least 0.5 weight percent but less than 5 weight percent of chemically combined, sulphur.

2. The use according to claim 1 in which the sulphonate containing monomer is a metal neutralised styrene sulphonate.

3. The use according to claim 1 and claim 2 wherein said acrylate or methacrylate, is 2-ethylhexylacrylate, methylacrylate, decylacrylate, n-butylmethacrylate, isodecylmethacrylate of a mixture thereof.

4. The use according to either of claims 1 and 2 wherein the monomer is n-butylacrylate or 2-ethylhexylmethacrylate.

5. A pressure sensitive or hot melt adhesive containing a thermoplastic elastomer composition including a copolymer or terpolymer according to any preceding claim.

## Patentansprüche

1. Verwendung eines festen elastomeren Co- oder Terpolymeren in Klebstoffen, das mindestens 80 Gew.% an Einheiten, die sich von mindestens einem Alkylacrylat- oder Acrylmethacrylatmonomer ableiten, worin die Alkylgruppe 1 bis 15 Kohlenstoffatome aufweist, und an Einheiten enthält, die sich von einem metall- oder aminneutralisierten Sulfonatmonomer ableiten, das gekennzeichnet ist durch die Formel

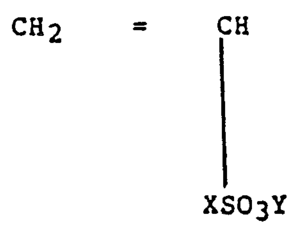

in der $(CH_2)_n$ oder Paraphenylen mit n = 0, 1, 2, 3 oder 4 ist und Y ein Kation ausgewählt aus den Gruppen IA, IIA, IB und IIB des periodischen System der Elemente oder ein Amin mit der Formel

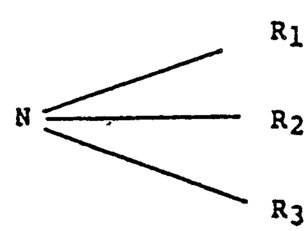

ist, in der $R_1$, $R_2$ und $R_3$ aliphatische $C_1$—$C_{12}$-Gruppen oder Wasserstoff sind, wobei das Copolymer oder Terpolymer wasserunlöslich und im wesentlichen frei von kovalenter Vernetzung ist und die Sulfonatmonomermenge mindestens 0,5 Gew.% aber weniger als 5 Gew.% chemisch gebundenen Schwefel liefert.

2. Verwendung nach Anspruch 1, wobei das Sulfonat enthaltende Monomer ein metallneutralisiertes Styrolsulfonat ist.

3. Verwendung nach Anspruch 1 und Anspruch 2, wobei das Acrylat oder Methacrylat 2-Ethylhexylacrylat, Methylacrylat, Decylacrylat, n-Butylmethacrylat, Isodecylmethacrylat oder eine Mischung derselben ist.

4. Verwendung nach Anspruch 1 oder 2, wobei das Monomer n-Butylacrylat oder 2-Ethylhexylmethacrylat ist.

5. Haftkleber oder Schmelzkleber, der eine thermoplastische elastomere Zusammensetzung enthält, die ein Copolymer oder Terpolymer gemäß einem der vorangehenden Ansprüche einschließt.

**Revendications**

1. Utilisation dans des adhésifs d'un copolymère ou terpolymère élastomérique solide comprenant au moins 80 pour cent en poids de motifs dérivés d'au moins un acrylate d'alkyle ou méthacrylate d'alkyle monomérique dont le groupe alkyle a 1 à 15 atomes de carbone et de motifs dérivés d'un sulfonate neutralisé de métal ou d'amine monomérique caractérisé par la formule:

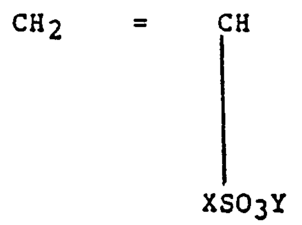

dans laquelle X est un group $(CH_2)_n$ ou paraphénylène où n a la valeur 0, 1, 2, 3 ou 4 et Y est un cation choisi dans les groupes IA, IIA, IB et IIB du Tableau Périodique ou une amine de formule:

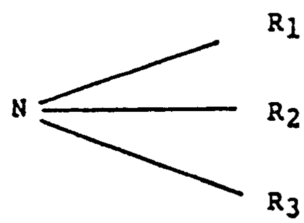

dans laquelle $R_1$, $R_2$ et $R_3$ sont des groupes aliphatiques en $C_1$ à $C_{12}$ ou l'hydrogène; ledit copolymère ou terpolymère étant insoluble dans l'eau et pratiquement dépourvu de réticulation covalente et la quantité de sulfonate monomérique apportant au moins 0,5% en poids mais moins de 5% en poids de soufre combiné chimiquement.

2. Utilisation suivant la revendication 1, dans laquelle le monomère contenant un sulfonate est un styrènesulfonate métallique neutralisé.

3. Utilisation suivant la revendication 1 et la revendication 2, dans laquelle ledit acrylate ou méthacrylate est l'acrylate de 2-éthylhexyle, l'acrylate de méthyle, l'acrylate d'isodécyle, le méthacrylate de n-butyle, le méthacrylate d'isodécyle ou un mélange de ces composés.

4. Utilization suivant l'une des revendications 1 et 2 dans laquelle le monomère est l'acrylate de n-butyle ou le méthacrylate de 2-éthylhexyle.

5. Adhésif sensible à la pression ou fondu à chaud contenant une composition d'élastomère thermoplastique renfermant un copolymère ou terpolymère suivant l'une quelconque des revendications précédentes.